# EUROPÄISCHE PATENTSCHRIFT

(11) **EP 2 133 583 B1**
(45) Veröffentlichungstag und Bekanntmachung des Hinweises auf die Patenterteilung: **09.03.2011**
(21) Anmeldenummer: 08010533.1
(22) Anmeldetag: 10.06.2008
(51) Int. Cl.: F16D 23/02

(54) **Synchronring**
Synchronous ring
Anneau synchrone

(43) Veröffentlichungstag der Anmeldung: 16.12.2009
(73) Patentinhaber: Hoerbiger Antriebstechnik GmbH, 86956 Schongau (DE)
(72) Erfinder: Echtler, Peter, 86956 Schongau (DE)
(74) Vertreter: Kitzhofer, Thomas

(56) Entgegenhaltungen:
- DE-A1- 4 203 540
- JP-A- 11 303 896
- JP-A- 60 227 021

## Beschreibung

Die Erfindung betrifft einen Synchronring gemäß dem Oberbegriff des Anspruches 1.

Ein derartiger Synchronring ist aus der DE 42 03 540 A1 bekannt.

Dieser Synchronring weist einen Reibbelag auf, der aus einem einheitlichen Belagmaterial besteht.

Hierbei tritt das Problem auf, dass bei Kaltschaltungen organische Beläge derartiger Synchronringe aufgrund ihrer Struktur schlechter als Streusinterbeläge abschneiden. In warmem Zustand hingegen sind organische Beläge von Vorteil.

Es ist daher Aufgabe der vorliegenden Erfindung, einen Synchronring der im Oberbegriff des Anspruches 1 angegebenen Art zu schaffen, der sowohl bei Kaltschaltungen als auch bei Warmschaltungen gegenüber dem Stand der Technik verbesserte Reibcharakteristiken aufweist.

Die Lösung dieser Aufgabe erfolgt durch die Merkmale des Anspruches 1.

Dadurch, dass der Reibbelag des erfindungsgemäßen Synchronrings, der auf der konischen Innenfläche des Ringkörpers angeordnet ist, zumindestens in einen ersten Belagabschnitt aus metallischem Material, vorzugsweise Streusintermaterial, und einen sich daran anschließenden zweiten Belagabschnitt aus organischem Material unterteilt ist, ist es möglich, die unterschiedlichen Reibeigenschaften dieser Belagmaterialien auf optimale Art und Weise zu kombinieren.

Hieraus ergibt sich der Vorteil eines schnellen Greifens des Streusinterbelages bei niedrigen Temperaturen wie auch eine hohe Synchronperformance mit gutem Schaltkomfort durch den organischen Reibbelag im Vollkontakt der Reibpaarung.

Es ist vom Prinzip her ferner möglich, den Reibbelag des erfindungsgemäßen Synchronrings auch mit einer größeren Anzahl von Belagabschnitten mit Reibmaterialien unterschiedlicher Charakteristiken zu versehen.

Die Unteransprüche haben vorteilhafte Weiterbildungen der Erfindung zum Inhalt.

Als organischer Reibbelag kommt vor allem ein Karbonbelag in Frage.

Ferner ist es möglich, die Belagabschnitte entweder nahtlos aneinander auf der konischen Innenfläche des Ringkörpers zu fixieren, insbesondere zu verkleben, oder zwischen den Reibbelagabschnitten Nuten vorzusehen.

Ferner ist es möglich, den Konuswinkel der Innenfläche des Ringkörpers größer auszulegen als den Konuswinkel der konischen Gegenreibfläche des Gangradkonus. Hierdurch wird es möglich, dass während des Schaltvorganges zunächst der Reibbelagabschnitt des Synchronringes im Bereich des kleinen Durchmessers greift. Erst bei höherer axialer Belastung wird durch die Elastizität des Synchronrings die restliche Belagfläche aus dem zweiten Belagmaterial zum Einsatz gebracht, was das zuvor erläuterte Reibverhalten noch verbessert.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig.1: eine Schnittdarstellung durch eine Ausführungsform eines erfindungsgemäßen Synchronrings, und
- Fig.2,3: vereinfachte Darstellungen zweier Zustände einer Reibpaarung, bestehend aus dem erfindungsgemäßen Synchronring und einem Gangradkonus.

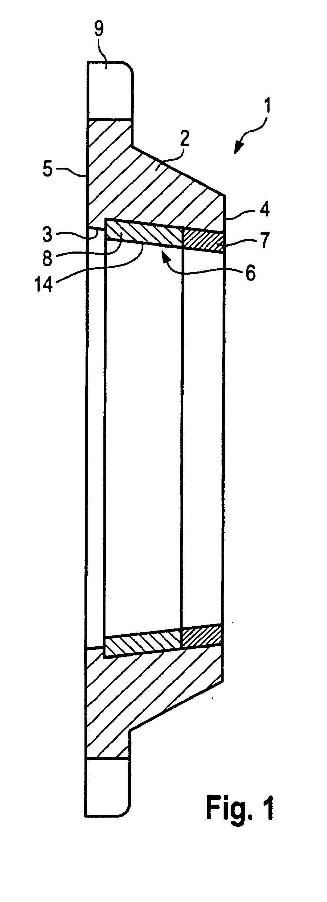

Der in Fig. 1 dargestellte Synchronring 1 weist einen Ringkörper 2 auf, der eine konische Innenfläche 3 umfasst, die sich von einer ersten Stirnfläche 4 zu einer zweiten Stirnfläche 5 aus erstreckt. Hierbei ist die Stirnfläche 4 diejenige auf der Seite des kleinen Konusdurchmessers, während die Ringfläche 5, wie sich aus der Darstellung der Fig. 5 von DE 42 03 540 A1 ergibt, die Stirnfläche auf der Seite des großen Konusdurchmessers ist.

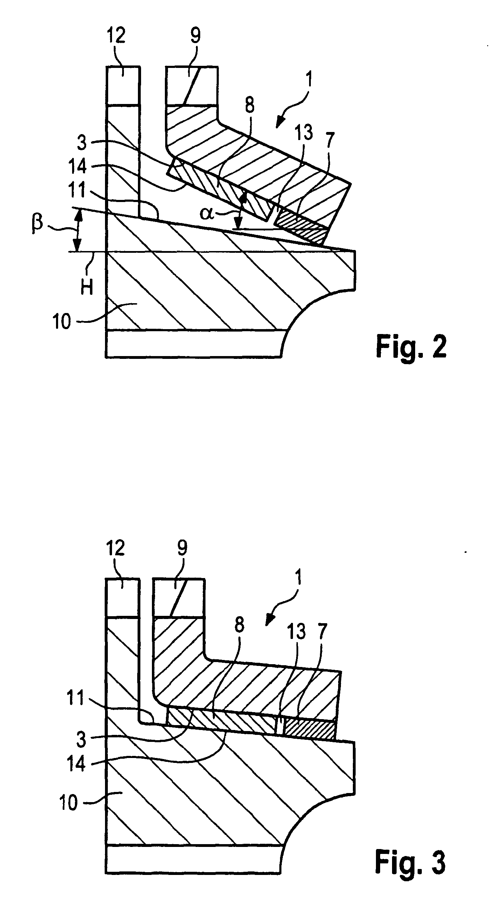

Auf der konischen Innenfläche 3 ist ein Reibbelag 6 (beispielsweise durch eine Verschweißung oder Verklebung) fixiert, der erfindungsgemäß in zumindest zwei Belagabschnitte 7 und 8 unterteilt ist. Bei der dargestellten Ausführungsform ist der erste Belagabschnitt 7 aus Streusintermaterial aufgebaut, während sich der in diesem Ausführungsbeispiel nahtlos an den ersten Belagabschnitt 7 anschließende Belagabschnitt 8 aus organischem Material besteht. Wie die Darstellung der Fig. 1 verdeutlicht, ergibt sich aus der Anordnung dieser beiden Belagabschnitte auf der Innenfläche 3 eine einheitliche ebene Reibfläche 14 mit einem Konuswinkel, der dem Konuswinkel α (siehe Fig. 2) der Innenfläche 3 entspricht. Obwohl bei der Ausführungsform gemäß Fig. 1 eine nahtlose Aneinanderreihung der Belagabschnitte 7 und 8 vorgesehen ist, ist es auch möglich, zwischen den Belagabschnitten 7 und 8 eine Nut vorzusehen, wie dies bei der Ausführungsform gemäß den Fig. 2 und 3 verdeutlicht ist (siehe Nut 13 zwischen den Belagabschnitten 7 und 8).

Wie Fig. 1 ferner verdeutlicht, ist der Ringkörper 2 des Synchronrings 1 ansonsten in üblicher Art und Weise aufgebaut und umfasst insbesondere eine Außenverzahnung 9.

In den Fig. 2 und 3 ist eine weitere, besonders bevorzugte Ausführungsform des erfindungsgemäßen Synchronrings 1 dargestellt, die sich neben der zuvor bereits erläuterten Nut 13 dadurch auszeichnet, dass der Konuswinkel α der Innenfläche 3 größer ist als der Konuswinkel β einer Gegenfläche 11 eines Gangradkonus 10. Der Konuswinkel α und β wird hierbei zwischen einer Horizontalen H und dem Verlauf der Innenfläche 3 bzw. Gegenfläche 11 bestimmt, wobei die Horizontale H einer Parallelverschiebung der Getriebewellenachse entspricht. Durch den Umstand, dass der Konuswinkel α größer ist als der Konuswinkel β, ergibt sich das in den Fig. 2 und 3 dargestellte Eingriffsverhalten. Gemäß Fig. 2 ist der Erstkontakt am kleinen Konusdurchmesser dargestellt, der nur durch den ersten Belagabschnitt 7 aus Streusintermaterial bewirkt wird. Dies ergibt den Vorteil eines schnellen Drehmomentaufbaues selbst bei Kaltschaltungen.

In Fig. 3 ist der Zustand zwischen den Reibpartnem 1 und 10 dargestellt, bei dem die Axialkraft steigt. Die konusförmige Reibfläche 14, die von den Belagabschnitten 7 und 8 gebildet wird, legt sich hierbei flächig an die Gegenfläche 11 an, so dass die maximale Pressung in Richtung auf den großen Konusdurchmesser (Stirnfläche 5) wandert. Die Belastung liegt in diesem Zustand auf dem zweiten Belagabschnitt 8, was zu einem hohen Reibmoment mit einer weichen Reibwertcharakteristik führt.

Neben der voranstehenden schriftlichen Offenbarung der Erfindung wird hiermit zu deren Ergänzung auf deren zeichnerische Darstellung in den Fig. 1 bis 3 explizit verwiesen und Bezug genommen.

### Bezugszeichenliste

- 1: Synchronring
- 2: Ringkörper
- 3: Konische Innenfläche
- 4: Erste Stirnfläche auf der Seite des kleinen Konusdurchmessers
- 5: Zweite Stirnfläche auf der Seite des großen Konusdurchmessers
- 6: Reibbelag
- 7: Erster Belagabschnitt aus metallischem Material
- 8: Zweiter Belagabschnitt aus organischem Material
- 9: Außenverzahnung
- 10: Gangradkonus
- 11: Gegenfläche (Reibfläche des Gangradkonus 10)
- 12: Außenverzahnung des Gangradkonus 10
- 13: Nut
- 14: Reibfläche (gebildet durch die Belagabschnitt 7 und 8)
- α: Konuswinkel der Innenfläche 3 bzw. Reibfläche 14
- β: Konuswinkel der Gegenfläche 11 des Gangradkonus 10

## Patentansprüche

1. Synchronring (1)
- mit einem Ringkörper (2), der eine konische Innenfläche (3) aufweist, die von einer ersten Stirnfläche (4) auf Seiten des kleinen Konusdurchmessers zu einer zweiten Stirnfläche (5) auf Seiten des großen Konusdurchmessers (12) verläuft, und
- mit einem Reibbelag (6), der auf der Innenfläche (3) angeordnet ist,
**dadurch gekennzeichnet,**
- **dass** der Reibbelag (6) zumindest in einen ersten Belagabschnitt (7) aus metallischem Material, vorzugsweise Streusintermaterial, und einen sich daran anschließenden zweiten Belagabschnitt (8) aus organischem Material unterteilt ist.

2. Synchronring nach Anspruch 1, **dadurch gekennzeichnet, dass** der Belagabschnitt (7) benachbart zur ersten Stirnfläche (4) und der Belagabschnitt (8) anschließend an den ersten Belagabschnitt (7) in Richtung auf die zweite Stirnfläche (5) verläuft.

3. Synchronring nach Anspruch 1 oder 2, **dadurch gekennzeichnet, dass** zwischen dem ersten Belagabschnitt (7) und dem zweiten Belagabschnitt (8) eine Nut (13) angeordnet ist.

4. Synchronring nach einem der Ansprüche 1 bis 3, **dadurch gekennzeichnet, dass** der Reibbelag (6) in einer Mehrzahl von Belagabschnitten aus unterschiedlichen Materialien unterteilt ist.

5. Synchronring nach Anspruch 4, **dadurch gekennzeichnet, dass** zwischen den Belagabschnitten jeweils eine Nut angeordnet ist.

6. Synchronring nach einem der Ansprüche 1 bis 5, **dadurch gekennzeichnet, dass** die Innenfläche (3) des Ringkörpers (2) einen Konuswinkel (α) aufweist, der größer ist als ein Konuswinkel (β) einer konischen Gegenfläche (11) eines Gangradkonus (10).

## Claims

1. A synchronizer ring (1), comprising
- a ring body (2) having a conical inner surface (3) which extends from a first front face (4) on the side of the small cone diameter to a second front face (5) on the side of the large cone diameter (12), and
- a friction lining (6) arranged on the inner surface (3),
**characterized in that**
- the friction lining (6) is subdivided at least into a first lining section (7) made from a metallic material, preferably dispersed sinter material, and an adjoining, second lining section (8) made from an organic material.

2. The synchronizer ring according to claim 1, **characterized in that** the lining section (7) extends adjacent to the first front face (4) and the lining section (8) adjoining the first lining section (7) extends towards the second front face (5).

3. The synchronizer ring according to claim 1 or 2, **characterized in that** a groove (13) is arranged between the first lining section (7) and the second lining section (8).

4. The synchronizer ring according to any of claims 1 to 3, **characterized in that** the friction lining (6) is subdivided into a plurality of lining sections made from different materials.

5. The synchronizer ring according to claim 4, **characterized in that** a respective groove is arranged between each of the lining sections.

6. The synchronizer ring according to any of claims 1 to 5, **characterized in that** the inner surface (3) of the ring body (2) has a cone angle (α) that is greater than a cone angle (β) of a conical counter-surface (11) of a speed change gear cone (10).

## Revendications

1. Bague de synchronisation (1),
- comportant un corps annulaire (2) qui présente une surface intérieure (3) conique qui s'étend depuis une première face frontale (4) du côté du petit diamètre de cône vers une deuxième face frontale (5) du côté du grand diamètre de cône (12), et
- comportant une garniture de friction (6) qui est agencée sur la surface intérieure (3),
**caractérisée en ce que**
- la garniture de friction (6) est divisée au moins en un premier tronçon de garniture (7) en matériau métallique, de préférence en matériau fritté répandu, et en un deuxième tronçon de garniture (8) s'y raccordant en matériau organique.

2. Bague synchrone selon la revendication 1, **caractérisée en ce que** le tronçon de garniture (7) s'étend au voisinage de la première face frontale (4), et le tronçon de garniture (8) se raccordant au premier tronçon de garniture (7) s'étend en direction de la deuxième face frontale (5).

3. Bague synchrone selon les revendications 1 ou 2, **caractérisée en ce qu'**une gorge (13) est agencée entre le premier tronçon de garniture (7) et le deuxième tronçon de garniture (8).

4. Bague synchrone selon l'une des revendications 1 à 3, **caractérisée en ce que** la garniture de friction (6) est subdivisée en une multitude de tronçons de garniture en différents matériaux.

5. Bague synchrone selon la revendication 4, **caractérisée en ce qu'**une gorge est agencée entre chaque tronçon de garniture.

6. Bague synchrone selon l'une des revendications 1 à 5, **caractérisée en ce que** la surface intérieure (3) du corps de bague (2) présente un angle conique (α) qui est plus grand qu'un angle conique (β) d'une surface antagoniste (11) conique d'un cône de pignon de vitesse (10)
